Europäisches Patentamt

**European Patent Office**

**Office européen des brevets**

(19)

(11) Publication number: **0 130 948**
A1

(12) **EUROPEAN PATENT APPLICATION**

(21) Application number: **84830114.9**

(22) Date of filing: **12.04.84**

(51) Int. Cl.⁴: **B 27 C 1/12**

(30) Priority: **06.05.83 IT 3350983**

(43) Date of publication of application: **09.01.85**
**Bulletin 85/2**

(84) Designated Contracting States: **AT CH DE FR GB LI SE**

(71) Applicant: **SCHIAVI CENTRO LAVORAZIONI MECCANICHE S.p.A., Via della Bosella, 12, I-29100 Piacenza (IT)**

(72) Inventor: **Xerra, Oscar, Via Nicolodi 16/A, Piacenza (IT)**

(74) Representative: **Bonfreschi, Mario, Bugnion S.p.A. Viale Trento Trieste, 25, I-41100 Modena (IT)**

(54) Oscillating drive-transmission device for the workpiece feed rollers of woodworking machinery.

(57) The invention envisages a speed reduction unit (1) which can oscillate by rotating around a horizontal axis lying parallel to the axis of a contact roller (6) keyed to the output shaft (4) of the reduction unit (1) itself. Unlike conventional machine feed drives of the same general type in which a fixed reduction unit drives the roller by way of an unwieldy drive shaft incorporating large universal joints, the drive-transmission set forth herein eliminates the problem of excessive strain on such drive-components by adopting a much simpler arrangement. The device as embodied herein avoids any transmitting of unwanted vibrations to the contact roller (6).

## Oscillating drive-transmission device for the workpiece feed rollers of woodworking machinery.

The requirement exists with woodworking machines, in particular those designed for shaping and moulding, for feeding-in sawn timbers —planks, laths &c.— along a sliding-type surface so as to bring them up to the tool.

This type of feed is provided by contact rollers whose outer surfaces are such as to create a strong degree of friction when brought down onto the top surface of the workpiece, from above. The workpiece is made to slide along a horizontally-disposed workbed in most instances. The contact roller is carried by a rotating shaft which is able to oscillate so as to adjust to the varying distance between roller and workbed produced by the geometry of the workpieces themselves —these being sawn timbers, and as a result, uneven and varying in thickness.

The rotating shaft in these machines is driven by a gearmotor bolted fast to the machine framework, which transmits drive through a shaft provided with two universal joints. Since the timber workpieces are fed in at somewhat slow speed, considerable force is needed to propel them forward, and the universal joint must be a large, heavy-duty component in view of the high torque to which it is subjected. High torque is instrumental in producing early wear in these universal joints, and this gives rise to a certain amount of mechanical play which when transmitted to the roller in the form of vibration, has an adverse effect on adjustment of the workpiece feed.

The object of the invention described herein is that of eliminating the drawbacks aforementioned by setting forth a device characterised in that it solves the problem of transmitting drive to the contact roller by adopting an oscillating drive-transmission wherein the double-jointed drive shaft aforedescribed is dispensed with in view of the excessive strain produced, and replaced by a simpler transmission link provided with one universal joint only —this being considerably smaller since it is mounted to the speed reduction unit's input shaft and thus subject to a reduced torque-loading by virtue of the higher speed at which it rotates. With this arrangement, the reduction unit carries the contact roller, and the fact that its axis-of-oscillation passes through the centre of the universal joint renders further universal joints unnecessary.

Furthermore, the reduced torque on this single universal joint produces less wear than with the conventional arrangement, meaning that no vibration is transmitted to the roller.

Lastly, the invention described herein affords greater machine stability by virtue of its embodiment, since the drive shaft and components connected thereto are located in the bottom part of the machine framework.

The invention will now be described by way of example, with the aid of accompanying drawings, in which:

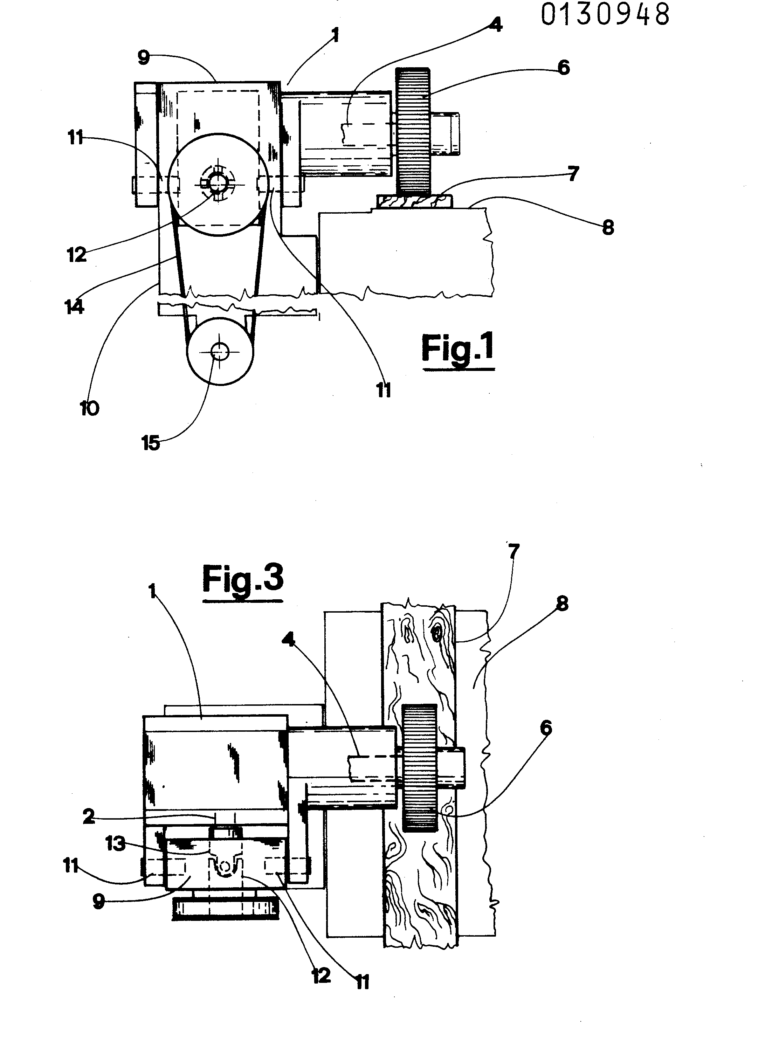

-fig 1 is an elevation of the device as described herein;

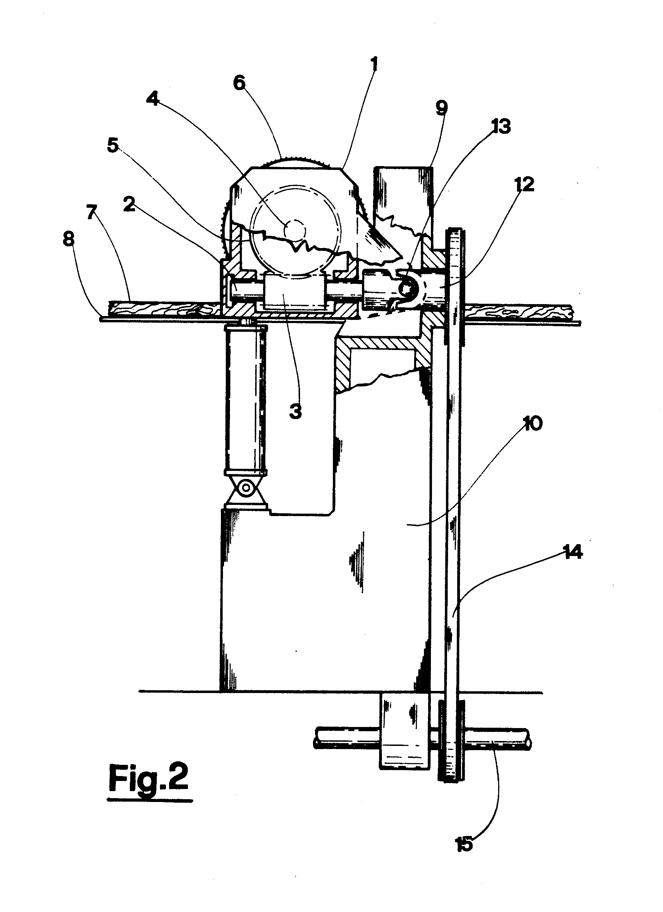

-fig 2 is the side view of fig 1 in cutaway;

-fig 3 shows the plan from above of the device illustrated in fig 1.

With reference to the drawings, 1 denotes a speed reduction unit of the worm gear type whose input shaft 2 is integral with the worm 3, and whose output shaft 4 is integral with the wheel 5 of the worm gear pair.

The output shaft 4 is horizontally disposed, and keyed to its free end is a contact roller 6 which during operation will be urged against the timber workpiece 7, this being fed forward along a smooth, horizontal workbed 8 and sliding thus in a direction normal to the axis of said roller 6.

The reduction unit 1 is hinged to a sliding mount 9 made fast to the machine framework 10, and pivots thus on two horizontal hinge-pins 11 lying parallel to the output shaft 4. The reduction unit 1 therefore has the capability of oscillating with respect to a horizontal axis —that of said hinge pins 11— which lies parallel to the axis of the roller 6, and is duly able to alter the roller's distance from the workbed 8 according to the differences in thickness from workpiece 7 to workpiece, as well as to unevenness in single sawn timbers.

The input shaft 2 lies at right angles to the output shaft 4 and is in receipt of drive from a fixed-position shaft 12. A universal joint connects shafts 2 and 12, and is disposed such that its centre of rotation lies concurrent with the axis of hinge-pins 11 aforesaid.

The fixed position shaft 12 is turned by a timing-belt 14 driven from below by the spindle 15 of a motor located at the bottom part of the machine framework 10 in the drawings, though the motor might equally well be mounted to one side of, or above the device as embodied herein.

16 denotes a pneumatic cylinder connected at one end to the reduction unit 1, and its remaining end to the machine framework 10. This cylinder 16 is designed to provide a flexible, downward pull on the reduction unit such as will urge the roller 6 into positive contact with the workpiece 7 beneath, thus creating the degree of friction necessary between roller and timber, for a smooth, uninterrupted feed.

Claims

1) An oscillating drive-transmission device for the workpiece feed rollers of woodworking machinery,
characterised in that it comprises:
   - a speed reduction unit (1) oscillating with respect
     to a basically horizontal axis;
   - at least one contact roller (6) keyed to the output
     shaft (4) of said reduction unit (1);
   - means for keeping said contact roller (6) urged against
     the timber workpieces (7).

2) Device as in claim 1 characterised in that the input
shaft (2) of said speed reduction unit (1) is coupled
to a fixed-position shaft (12) by way of a universal
joint (13) whose centre lies concurrent with the axis
around which said reduction unit (1) rotates in oscillation; said fixed-position shaft (12) associated immovably with the machine framework (10).

3) Device as in claim 1 characterised in that said speed
reduction unit (1) is in receipt of drive from a motor
spindle (15) located at the bottom part of said frame-
work (10).

**1/2**

0130948

**Fig.1**

**Fig.3**

**Fig.2**

## DOCUMENTS CONSIDERED TO BE RELEVANT

EP 84830114.9

| Category | Citation of document with indication, where appropriate, of relevant passages | Relevant to claim | CLASSIFICATION OF THE APPLICATION (Int. Cl. 3) |
|---|---|---|---|
| X | DE - A1 - 2 513 968 (FESTO-MASCHINENFABRIK)  * Fig. 1,2,5 * | 1,2 | B 27 C 1/12 |
| X | DE - B - 1 079 822 (REICH)  * Totality * | 1,2 | |
| A | GB - A - 5 598/A.D. 1892 (ANDER-SON)  * Totality * | 3 | |

TECHNICAL FIELDS
SEARCHED (Int. Cl. 3)

B 27 C   1/00
B 27 C   5/00
B 27 B   3/00
B 27 B  25/00

The present search report has been drawn up for all claims

| Place of search | Date of completion of the search | Examiner |
|---|---|---|
| VIENNA | 27-09-1984 | TRATTNER |